# EUROPEAN PATENT APPLICATION

(11) **EP 4 535 197 A1**
(43) Date of publication of application: **09.04.2025**
(21) Application number: 23201421.7
(22) Date of filing: 03.10.2023
(51) Int. Cl.: G06F 16/9535, G06F 16/242

(54) **SYSTEM AND METHOD FOR GENERATING AN EXECUTABLE DATA QUERY**

(71) Applicant: SAP SE, 69190 Walldorf (DE)
(72) Inventor: KREBS, Rouven, D-69190 Walldorf (DE)
(74) Representative: DeltaPatents B.V.

(57) **Abstract**

Some embodiments are directed to a generating an executable data query. The query is configured for execution at a data source for the purpose of data retrieval therefrom. A machine learning model is applied to a query example to adjust the query example according to an input query, thus obtaining the executable data query.

## Description

### TECHNICAL FIELD

The presently disclosed subject matter relates to a method for generating an executable data query, a system for generating an executable data query, and a computer readable medium.

### BACKGROUND

Moderns landscapes, such as SAP Landscape Management Cloud (LaMa Cloud) help users to simplify, automate, and centralize the management and operations of the landscapes, e.g., that are running on a public cloud. LaMa Cloud collects data from the hyperscalers, operating system and SAP systems running on top. In addition, meta information like tagging, groups and credentials are maintained in a central data model. The model contains static information like hostnames, VM names, etc., and temporary information like states.

This data model can be queried via GraphQL, a query language and runtime forAPls. It allows clients to request only the data they need, and nothing more, making it more efficient and flexible than traditional REST APIs. With GraphQL, clients can specify the shape and structure of the data they want to receive, and the server will respond with exactly that data. This allows for faster and more efficient data transfer, as well as better flexibility for clients. GraphQL also has a strict schema definition and allows to easily combine several data sources into one quarriable model.

### SUMMARY

Users of the known system need answers to queries such as
- A concrete question about the landscape like: What is the state of VM xyz
- Analytics function like: how many percent of the VMs are running in Europe
- Interpretation of landscape information like: What is recommended to increase the High Availability of our existing Databases
- Summarizing information: Provide an overview of our NetWeaver systems regarding memory consumption
- Reporting on questions like the previous: report about our system landscapes status.

Neural Networks may be used to create text output. Large Language Models (LLM) have demonstrated for example the capability to structure, summarize, and interpret long text or data input. Many commercial offerings are now available, including GPT, ChatGPT, Claude, amongst others.

However, these solutions still require real data from the environment in which they are used. One approach to deal with this problem is to introduce plugins or functions to the models. In these cases, the Large Language Model identifies if a provided plugin/function could provide additional data to the user's prompt. Based on a specification of, e.g., a REST endpoint the LLM then decides how to call this endpoint including the parameterization. The response data is then used to generate an answer.

This solution is limited in case the structure and the amount of data that can be queried is large. Furthermore, the approach is error prone since LLMs may be good at interpreting or summarizing texts, but have a weakness in interpreting complex interface definitions on the specification layer. Furthermore, in case a landscape is to be queried for information, there might be the need to execute multiple REST endpoints. E.g., /api/VirtualMachines /api/SapSystems and later the different responses would have to be set in context. Due to the independent REST Calls and specification on Type level the results are not of practical use.

Using a specification instead, e.g., a type level specification, a GraphQL specification/schema, and prompting it together with a user question and asking for a correct query to retrieve the data also comes with drawbacks.
1. The formal specification/schema is too large for the LLM token limits
2. Even in case of very small or condensed schemas the results are error-prone and often result in semantically wrong or even non-compliant queries.

Experiments showed that LLMs are not capable of creating good queries based on a schema definition, and in any case, the maximum prompt size is exceeded too quickly. Embodiments are provided to generate an executable data query. The generated query is configured for execution at a data source for the purpose of data retrieval therefrom. A machine learning model is applied to a query example to adjust the query example according to an input query, thus obtaining the executable data query.

For example, based on a noncompliant input query, one or more query examples related to the input query are selected from a plurality of query examples. This selection could use an LLM, or be assisted by an LLM, e.g., to select keywords related to the input query, e.g., commands that are likely needed to satisfy the input query, but this selection could also be done without an LLM, e.g., using other machine learning techniques. For example, a satisfactory way to do the selection is to define a fitness function that indicates for each query example how likely it is to provide data useful to answer the input query. The fitness function may then be optimized over the plurality. Once a query example has been selected, a machine learning model is tasked with adjusting the example query into a query that will provide useful data to answer the input query. At the same time the machine learning model may be tasked to reduce the size of the example query.

Once an executable data query is obtained, it may be executed at the data source. The resulting information that is thus obtained, may be reported to the user. The resulting information may also be used as input to a machine learning model to formulate a natural language answer to the input query.

Embodiments comprise one or more electronic devices, e.g., computer(s) configured for an embodiment. The methods defined in the claims and described herein may be applied in a wide range of practical applications. Such practical applications include computer system maintenance, database maintenance, improved querying of information from information systems, e.g., databases, and the like.

An aspect is a method for generating an executable query. An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the presently disclosed subject matter is a method of making the computer program available for downloading. This aspect is used when the computer program is uploaded, and when the computer program is available for downloading.

### BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
Figure 1a schematically shows an example of an embodiment of a system for generating an executable data query,
Figure 1b schematically shows an example of an embodiment of a system for generating an executable data query,
Figure 1c schematically shows an example of an embodiment of a system for generating an executable data query,
Figure 2a schematically shows an example of an embodiment of a system for generating an executable data query,
Figure 2b schematically shows an example of an embodiment of selecting at least one query example,
Figure 2c schematically shows an example of an embodiment of a system for generating an executable data query,
Figure 3 schematically shows an example of an embodiment of a method for generating an executable data query,
Figure 4a schematically shows a computer readable medium having a writable part comprising a computer program according to an embodiment,
Figure 4b schematically shows a representation of a processor system according to an embodiment.

### Reference signs list

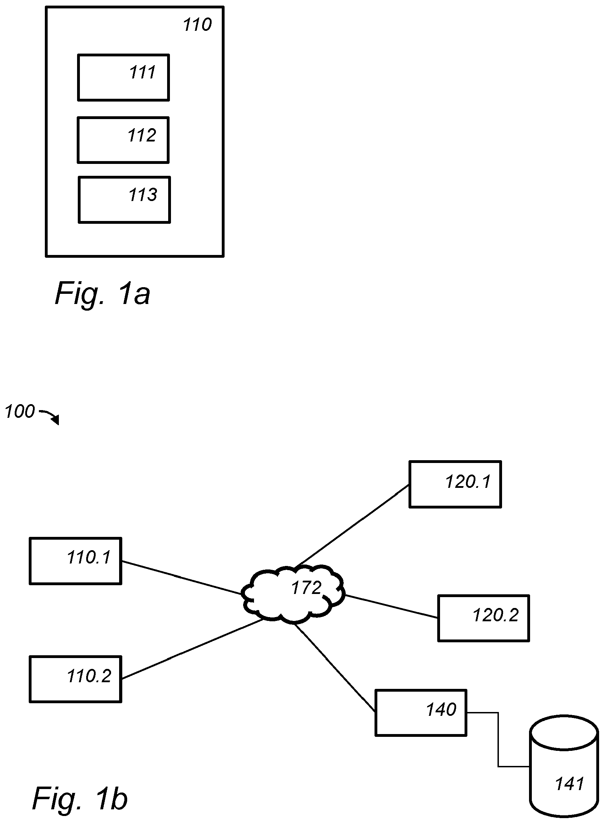

The following list of references and abbreviations corresponds to figures 1a-2c, 4a-4b, and is provided for facilitating the interpretation of the drawings and shall not be construed as limiting the claims.
- 110: a system for generating an executable data query
- 111: a processor system
- 112: storage
- 113: communication interface
- 110.1: a management part
- 110.2: a machine learning part
- 120.1, 120.2: a client device
- 140: a server configured for data queries
- 141: a database
- 160: a landscape
- 161: servers
- 162: hyperscalers
- 150: a system for generating an executable data query
- 151: collectors
- 152: landscape model
- 153: executable data query unit
- 170: a machine learning model server
- 171: a machine learning model

- 210: a user input unit
- 211: an input query
- 220: a data needed unit
- 230: a query selection unit
- 231: a plurality of query examples
- 232: one or more selected query examples
- 240: an adjusting unit
- 241: an executable data query
- 250: a query execution unit
- 251: a database
- 252: a query result
- 260: a user response unit
- 261: user response
- 233: a keyword selection unit
- 234: one or more selected keywords
- 235: a relationship function unit
- 1000, 1001: a computer readable medium
- 1010: a writable part
- 1020: a computer program
- 1110: integrated circuit(s)
- 1120: a processing unit
- 1122: a memory
- 1124: a dedicated integrated circuit
- 1126: a communication element
- 1130: an interconnect
- 1140: a processor system

### DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

**Figure 1a** schematically shows an example of an embodiment of a system 110 for generating an executable data query.

System 110 is configured to obtain an input query requiring information from a data source, which input query is noncompliant with a query language and thus inexecutable at the data source. System 110 then generates an executable data query that is compliant with the query language, and which is executable at the data source. The new executable data query can be executed at the data source so that the required information from the data source can still be obtained.

System 110 may comprise a processor system 111, a storage 112, and a communication interface 113.

Storage 112 may be, e.g., electronic storage, magnetic storage, etc. The storage may comprise local storage, e.g., a local hard drive or electronic memory. Storage 112 may comprise non-local storage, e.g., cloud storage. In the latter case, storage 112 may comprise a storage interface to the non-local storage. Storage may comprise multiple discrete sub-storages together making up storage 112

Storage 112 may be non-transitory storage. For example, storage 112 may store data in the presence of power such as a volatile memory device, e.g., a Random Access Memory (RAM). For example, storage 112 may store data in the presence of power as well as outside the presence of power such as a non-volatile memory device, e.g., Flash memory. Storage 112 may comprise a volatile writable part, say a RAM, a non-volatile writable part, e.g., Flash. Storage may comprise a non-volatile non-writable part, e.g., ROM, e.g., storing part of the software.

In the various embodiments of communication interface 113, the communication interface may be selected from various alternatives. For example, the interface may be a network interface to a local or wide area network, e.g., the Internet, a storage interface to an internal or external data storage, an application interface (API), etc.

The system 110 may communicate internally, with other systems, with other devices, external storage, input devices, output devices, and/or one or more sensors over a computer network. The computer network may be an internet, an intranet, a LAN, a WLAN, WAN, etc. The computer network may be the Internet. The system 110 comprise a connection interface which is arranged to communicate within system 110 or outside of system 110 as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

System 110 may comprise one or more machine learning models, e.g., generative models, e.g., to generate the executable data query. The machine learning models may comprise a large language model (LLM). The machine learning models may be stored at system 110, e.g., stored in storage 112, e.g., its parameters may be stored. Instead, system 110 may communicate through interface 113 with an external machine learning server. The external machine learning server may store the machine learning model, e.g., the LLM.

System 110 may communicate with an external client device for receiving the input query. The input query could also be obtained locally at system 110, e.g., through a keyboard.

System 110 may have a user interface, which may include well-known elements such as one or more buttons, a keyboard, display, touch screen, etc. The user interface may be arranged for accommodating user interaction for performing the transformation from an input query to an executable query, and optionally for executing the query, and optionally reporting the result thereof to a user.

The execution of system 110 may be implemented in a processor system 111. System 110 may comprise functional units to implement aspects of embodiments. The functional units may be part of processor system 111. For example, functional units shown herein may be wholly or partially implemented in computer instructions that are stored in a storage of the device and executable by processor system 111.

Processor system 111 may comprise one or more processor circuits, e.g., microprocessors, CPUs, GPUs, etc. System 110 may comprise multiple processors. A processor circuit may be implemented in a distributed fashion, e.g., as multiple sub-processor circuits. For example, system 110 may use cloud computing.

Typically, the system 110 comprises one or more microprocessors which executes appropriate software stored at the device; for example, that software may have been downloaded and/or stored in a corresponding memory, e.g., a volatile memory such as RAM or a non-volatile memory such as Flash.

Instead of using software to implement a function, system 110 may, in whole or in part, be implemented in programmable logic, e.g., as field-programmable gate array (FPGA). The device may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, system 110 may comprise circuits, e.g., for neural network processing, and/or arithmetic processing.

In hybrid embodiments, functional units are implemented partially in hardware, e.g., as coprocessors, e.g., neural network coprocessors, and partially in software stored and executed on the device.

**Figure 1b** schematically shows an example of an embodiment of a system 100 for querying a data source. In this embodiment, system 110 comprises a machine learning model, e.g., to generate the executable data query. System 110 is split into two parts: a management part 110.1 and a machine learning part 110.2. Management part 110.1 receives the input query and performs the algorithm to generate the executable query, using the machine learning part 110.2 as needed. Machine learning part 110.2 may comprise a communication interface to receive inputs for its machine learning model, and to return outputs thereof. Machine learning part 110.2 may be run locally, e.g., on the same server as management part 110.1.

Parts 110.1 and/or 110.2 may be devices or systems. For example, part 110.1 could be a single device, e.g., a server and part 110.2 could be a system comprising multiple devices. Parts 110.1 and 110.2 could be integrated into a single system, or device. Part 110.2 may be external, and may be, but need not be part of an embodiment of a system generating an executable data query. The machine learning model of part 110.2 is accessible to part 110.1 over a computer network.

The machine learning model could be a general-purpose large language model, which can be configured for code generation through zero shot, or few shot learning. The machine learning model could be specifically trained, or refined for code generation compliant with the query language.

System 100 further comprises client devices 120.1 and 120.2. The client devices are configured to interact with system 110. For example, a client device may send an input query to system 110.1, and receive an executable query in return and/or the output of executing the executable query.

System 100 further comprises a data source 140. For example, source 140 may comprise a server, e.g., database server, a web server, or the like. Source 140 may comprise a server, a plurality or server, a hyperscaler, or a landscape, etc., configured to respond to queries about it configuration, technical state, its software, stored data, and the like.

For example, source 140 may be configured to receive a query compliant to the query language and to return a corresponding query result after executing the query. For example, data source 140 may optionally comprise a database 141 storing information from which the query retrieves and/or collects information.

In an embodiment, part 110.1 and a client device, e.g., device 120.1 are integrated. In an embodiment, part 110.1 and a client device, e.g., device 120.1 are integrated as well as part 110.2, e.g., running one or more local machine learning models, e.g., local LLMs.

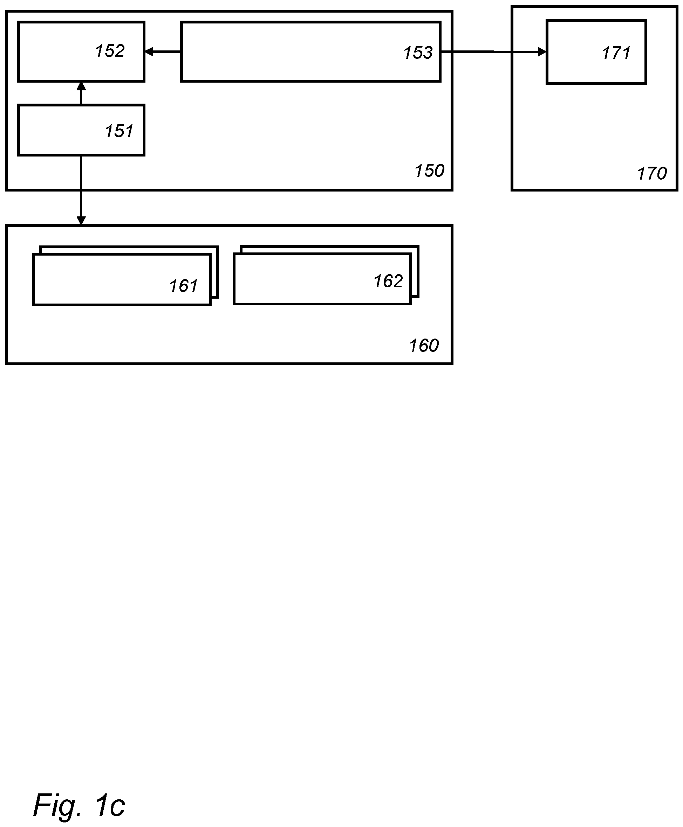

**Figure 1c** schematically shows an example of an embodiment of a system 150 for generating an executable data query. This embodiment comprises a landscape 160, which may comprise one or more servers 161, and/or hyperscalers 162.

Landscape 160 may comprise an arrangement of one or more servers 161 in a company. The landscape may have different environments, e.g., development, quality, and production environments. Each of these environments may have its own purpose. Landscape 160 may further comprise one or more hyperscalers. Hyperscalers include large cloud computing providers like Amazon Web Services (AWS), Microsoft Azure, Google Cloud Platform (GCP), and Alibaba Cloud. Enterprise software, such as SAP software, may run on one or more hyperscaler platforms 162 and/or on one more server 161.

System 150 may comprise an executable data query unit 153 configured to generate an executable data query. Unit 153 may be configured according to an embodiment of a method for generating an executable data query.

System 150 may comprise one or more collectors 151 configured to interface with landscape 160. System 150 may comprise a landscape model 152. The landscape model may comprise a logical representation of the configuration and structure of landscape 160. Landscape model 152 acts as the data source for which unit 153 generates an executable query, and from which query results may be obtained after executing the executable query there.

Collectors 151 collect data from landscape 160, e.g., the hyperscalers 162, operating system and other systems 161. In addition, meta information like tagging, groups and credentials are maintained in landscape model 152. Model 152 contains static information like hostnames, VM names, etc., and temporary information like states. Model 152 can be queried via GraphQL, a query language and runtime for APIs. After unit 153 generated a query, it may be executed at the data source, in this case model 152.

System 150 or system 110 may interact with a machine learning model server 170 that comprises a machine learning model 171. For example, machine learning model 171 may be provided by OpenAl, e.g., running the large language model ChatGPT, e.g., based on GPT-4, or GPT-3.5, e.g., the August 3 version of 2023, or an earlier or later version. For example, server 170 may be provided by Anthropic, e.g., running Claude or Claude Instant.

Instead of a general purpose LLM, machine learning model 171 may comprise a machine learning model, e.g., a generative neural network trained to generate data queries compliant with the query language.

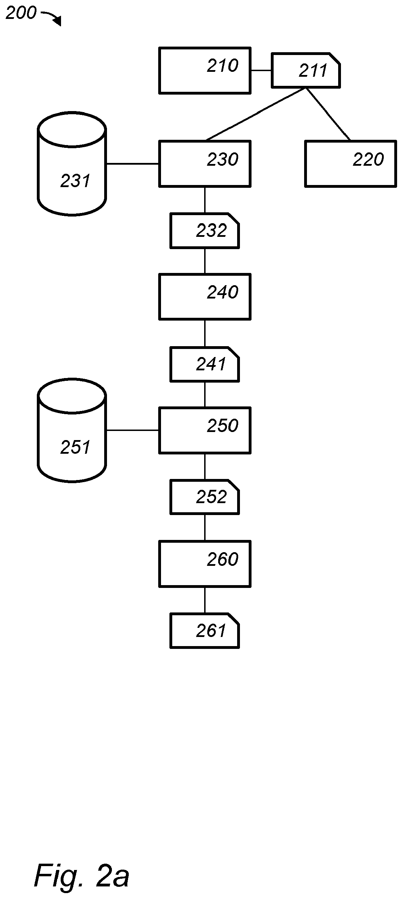

**Figure 2a** schematically shows an example of an embodiment of a system 200 for generating an executable data query.

The executable data query is intended for execution on a data source, such as data source 140, landscape model 152, and the like. The data source is configured for data queries that are compliant with a query language. The query language adheres to its own specific syntax that must be followed in order to construct valid queries. For example, the query language may be defined in a grammar specification, e.g., written in a formal grammar such as Backus-Naur Form (BNF), Extended Backus-Naur Form (EBNF), Parsing expression grammar (PEG), and the like. It is not necessary that such a grammar specification be explicitly written out though. The executable data query may be expressed in text, e.g., a series of computer interpretable instructions according to the query language. The data query may be expressed in form that, though computer interpretable, is not necessarily human readable. For example, an executable query according to the query language may take the form of one or more function calls, e.g., local function call, e.g., to a library, or remote function calls, e.g., to a web server. For example, the function calls could be so-called REST function calls. For example, a function call, especially to a web server, including a REST function call, may include a data object, e.g., expressed in JSON (JavaScript Object Notation), XML or the like, the content of which is subject to syntactical restrictions, e.g., is required to follow a query language. REST function calls are an example of state-less function calls.

Note that it is not necessary to have available a formal description, a schema, or the like, regardless whether such a specification exists. It is sufficient to have examples of queries. For example, the query example could be generated by a human expert, or by observing actual use of the system by expert users, etc. The human expert may only have an implicit knowledge about the allowed queries.

A motivating example, is to generate executable queries that retrieve data from technical systems, such as landscapes. The generated executable queries allow a user to gain insight in the technical state of the system, enabling him/her to react thereto, e.g., to make technical changes to the technical system. For example, a user may interrogate the system to learn about a load problem, which may be alleviated by adding a virtual machine, moving a load, or the like.

In an embodiment, the executable queries relate to a data source, and satisfy a schema defining the organization of data in the data source. For example, the schema may be a one or more of: JSON Schema, XML Schema Definition (XSD), Protocol Buffers (ProtoBuf), Apache Avro, OpenAPI Specification (OAS), RAML (RESTful API Modeling Language), AsyncAPI, Web Application Description Language (WADL), GraphQL Schema, SQL Database Schema. Prototypes used a GraphQL Schema, though embodiments may be adapted to other types of schema.

In an embodiment, the query language is GraphQL, preferably restricted by a GraphQL Schema. In an embodiment, the query language is SQL, possibly restricted by a SQL Database Schema.

System 200 may comprise a user input unit 210 configured to obtain an input query 211 requiring information from the data source. Input query 210 is noncompliant with the query language and inexecutable at the data source. For example, user input unit 210 may be configured to receive the input query, e.g., over a network connection, from a keyboard, or from some other input device. System 200 may obtain the input query from another source than from a user. For example, input query 210 may be obtained from a script comprising one or more noncompliant data queries.

Input query 211 is not compliant with the query language, and cannot be executed as is at the data source. This may have various reasons, for example, input query 211 may be typed by a human and may contain errors, e.g., due to an oversight, or lack of full understanding of the query language. For example, input query 211 may be according to a previous version of the query language. For example, input query 211 may be according to another query language, e.g., another grammar.

In a particularly advantageous embodiment, the input query is stated in a human language or natural language, such as English, but does not conform to a formal grammar, including the formal grammar of the query language. This embodiment is taken as the motivating example herein, but embodiments may be adapted to the other examples, e.g., a defective query in the query language comprising one or more syntactical and/or semantical errors.

Input query 211, e.g., writing in a human language may comprise a technical state query requesting information regarding a technical state of a technical system. For example, input query 211 may request retrieval of data from a technical system, e.g., a landscape. For example, input query 211 may request retrieval of data from a business data interface.

In an embodiment, system 200 comprises an optional data-needed unit 220. Unit data 220 is provided with input query 211 and determines if data is needed to answer the query. For example, if input query 211 is a natural language query, it may happen that the query does not seem to relate to a technical purpose, for which additional data is helpful. This may be detected by data-needed unit 220.

For example, unit 220 may check if the input query is related to a general question or if real data could improve the quality of the response. In case of a non-data related question, the process may be aborted and/or an error message may be sent to the user. Alternatively, the input query may be handled directly by an LLM without further retrieved data to improve the query response.

Data-needed unit 220 may determine if there is a need for data retrieval. Unit 220 may comprise a model, e.g., configured to analyze input query 211, e.g., comparing it with a description of a data source(s) interface. For example, the data source may be described using keywords which are matched against the input query. The model of unit 220 may be a machine learning model. For example, unit 220 may comprise a rule-based system, e.g., an expert system, keyword matching, a naive Bayes classifier, a regular expression based pattern matcher, etc.

A successful approach in testing turned out to be zero-shot learning using a general purpose LLM model. For example, the following zero-shot learning prompt may be used
GIVEN: {inputQuery}
TASK: Does the GIVEN user input indicate the need of data [YES/NO].

Like all prompts herein, an additional context prompt may be included, e.g., appended or prepended, or otherwise passed to the machine learning model, e.g., LLM. In a more advanced configuration, the machine learning model, such as an LLM, may be capable of a dual-input functionality which may be utilized to separately input the context and prompt.

The context prompt may include information about the type of data that the data source may provide. The {inputQuery} contains input query 211. Instead of a zero-shot prompt, a few-shot prompt may be used, including 1, 2, or more example input queries and appropriate responses, e.g., yes/no responses.

Data-needed unit 220 is optional. Instead, it may be assumed that additional data will be useful. For example, the user may know this restriction of the system, and only submit appropriate input queries.

One approach to translate input query 211 to an executable query confirming to the query language would be to supply input query 211, possibly together with the schema relevant to the data source, directly to a machine learning model, e.g., an LLM, and request an executable query satisfying input query 211, e.g., in the form of zero-shot learning prompt. Experiments showed that this approach does not work well, however. A formal specification such as a schema, such as a GraphQL schema typically is too large, even for small sized solutions, and exceeds LLM token limits. Even in case of very small or condensed schemas the results turn out to be error-prone and often result in semantically wrong or even non-compliant queries. Since LLMs appear to lack the ability to create good queries based on a schema definition, and since their maximum prompt size is exceeded too fast, another approach is needed.

In an embodiment, query examples are used instead of a formal specification, such as a schema. Based on a query example a machine learning model, e.g., an LLM, is prompted to adjust the query to correspond to the input query. Experiments showed this significantly improves the quality of the generated queries, both from a semantics perspective as well as from a compiler error point of view.

Accordingly, system 200 may comprise a query selection unit 230. Query selection unit 230 is configured to access a plurality of query examples 231, and to select from the plurality of query examples at least one query example related to the input query.

The selected query example(s) relate to the input query. For instance, the selected query and the input query may be semantically similar, e.g., as both relate to the same type of data. For example, both the input query and the selected query may relate to the same data, e.g., may require the same data to be retrieved to respond to the query. The selected query may retrieve data that is expected to be responsive to the input query, or a response to the input query may be expected to be derived from data that would be retrieved by the selected query. For example, the input query and selected query may be related in that the queries share a functional purpose. For example, the input query and selected query may share attributes, a commonality in the target data subset, or a similar operational context. In an embodiment, using the example query would produce the needed data, but would produce further data, typically a lot of it, that is not needed. The unneeded data may lead to exceeding the input size of a subsequent machine learning input, if not reduced. In this case, selecting a related example query comprises selecting an example query that produces the needed data, though possibly much more besides.

The query examples in plurality 231 are syntactically correct according to the query language and are configured to correctly retrieve data from the data source when executed at the data source. In fact, it turns out that in addition to the syntactically correct plurality of query examples, it is acceptable if query examples are accessible for selection that have a syntactic error, as a subsequent adjustment by the LLM will tend to repair said syntax error. Nevertheless, it is preferred if all query examples that are accessible by query selection unit 230 are syntactically correct, e.g., satisfy the schema.

There are several ways in which plurality 231 may be obtained.

For example, plurality 231 may be manually constructed. For example, one may analyze a schema and manually create queries that cover various types, fields, and nested structures, etc. This approach is time-consuming but offers high precision in covering specific aspects of the schema. On the other hand, it was found in practice that manual generation had the benefit of better reflecting often used prompts from expert users.

For example, plurality 231 may be generated from the schema using an algorithm. For example, the algorithm may parse a query language specification, e.g., a schema. For example, a schema parsing library, such as the JavaScript library GraphQL-js for GraphQL schema, may be used to parse the schema and obtain a tree, e.g., an Abstract Syntax Tree (AST). The types, fields, arguments, and relationships may be extracted from the tree. Next the algorithm may iterate through types and fields in the schema and for each type generate a query that requests all possible fields. It was found advantageous to generate few but large queries, e.g., queries that obtain a large amount of data.

Nevertheless, the queries need to have a size below a threshold depending on a maximum prompt size of the subsequent machine learning model, e.g., LLM. The threshold may be computed by subtracting from the machine learning model maximum input size, the sizes of the remainder of the prompt. Keeping query size small, e.g., below a threshold also helps to keep cost down, as machine learning models such as LLM are expensive to operate. External LLM often charge per token or proportional to the number words sent to the LLM. Accordingly, using example queries, which are smaller than a threshold, e.g., smaller than the schema definition would also reduce costs.

Creating a full extended query, covering all options given by a schema may end up in much too many tokens. These input sizes may not be supported by the machine learning model. They may also decrease quality. This can be resolved by generating multiple queries that each sample part of the options. Another approach is to restrict the generated queries to cover a certain set of scenarios, e.g., by restricting the types of data that may be retrieved. The generated queries may also be generated by varying a seeding set of queries, e.g., user generated queries.

In an embodiment, a schema is split into multiple parts, e.g., semantically similar parts. A part of the schema most related to the input query is selected, and example queries are then generated specifically for the part of the schema.

Typically, the plurality of example queries is pre-computed before receiving the input query. In an embodiment, example queries are computed dynamically after receiving the input query. The dynamic computing may be dependent on the input query. For example, a machine learning model may be applied to generate the appropriate keywords, e.g., command, options and the like, after which a grammar-based generator generates the plurality of example queries.

For example, plurality 231 may be sourced from queries that are recorded in regular use of the data source. The recorded queries may be filtered to remove, e.g., syntactically incorrect queries, duplicates and near-duplicates.

In an embodiment, queries are obtained in part from sourced examples, which may be manually tuned by an expert user to the particular data source they are to work on, and in part by automatically generating, e.g., to cover specific aspects, e.g., remaining aspects not covered by the sourced and/or tuned examples.

Query selection unit 230 is configured to select from the plurality of query examples at least one query example related to the input query. For example, a fitness function may be defined indicating a relatedness between a candidate query in plurality 231 and input query 211. Various approaches are possible.

For example, for each of the queries in plurality 231, and also for input query 211 a vector may be determined. For example, this may be a TF-IDF vector, word embedding, sentence embedding, or other embedding vectors. Having a vector representation of a candidate query and of input query 211 their relatedness may be computed with a vector similarity function, e.g., cosine similarity, distance, or the like. For example, a machine learning model may be trained for sentence embeddings. By encoding both non-compliant input queries and compliant candidate queries into the same latent space, it may be ensured that similarity can be computed with a vector similarity function.

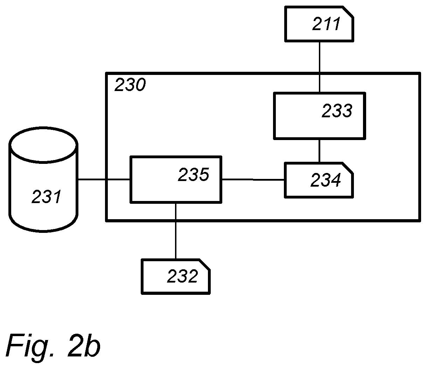

**Figure 2b** schematically shows an example of an embodiment of selecting at least one query example. The example embodiment for query selection unit 230, may be used in system 200 of figure 2a. This example, provides a query fitness function that expresses how related a candidate query from plurality 231 is to input query 211. For example, a query fitness function may be used to compute a fitness for each query in plurality 231 and select the k-best queries, e.g., with best fitness. Parameter k may be empirically selected, e.g., based on the number of tokens accepted by the subsequent adjusting machine learning model. A typical value for k is 1. Other values may be 1 or more, 2 or more, 3 or more, etc. As noted herein, many other ways of computing a fitness for a query based on relatedness exist.

Query selection unit 230 in this embodiment comprises a keyword selection unit 233. Unit 233 is configured to identify keywords, from a predetermined list of keywords, that apply to input query 211. This may be done with various machine learning approaches, e.g., expert systems, other rule-based systems, and the like. One approach is to use an LLM, with zero or few shot learning. For example, the following prompt may be used.
GIVEN 1: {inputQuery}
GIVEN 2: recentChange, meanCpuUsage, authDetails,
fetchVirtualMachines, (...)
TASK 3: Identify keywords from GIVEN 2 that best describe GIVEN 1...

This prompt may be extended with a context prompt, e.g., explaining the keywords.

As a result, one or more selected keywords 234 are obtained.

Query selection unit 230 in this embodiment comprises a relationship function unit 235. Relationship function unit 235 computes a fitness function for each candidate query in plurality 231 by comparing the candidate query to the list of keywords 234. For example, the fitness for a candidate query may be increased if a keyword from list 234 occurs in it, possibly increasingly so if the keyword occurs multiple times. Some keywords may be given more weight, as they are known to be important for data retrieval. Below is pseudo code for a possible query fitness function based on this concept.

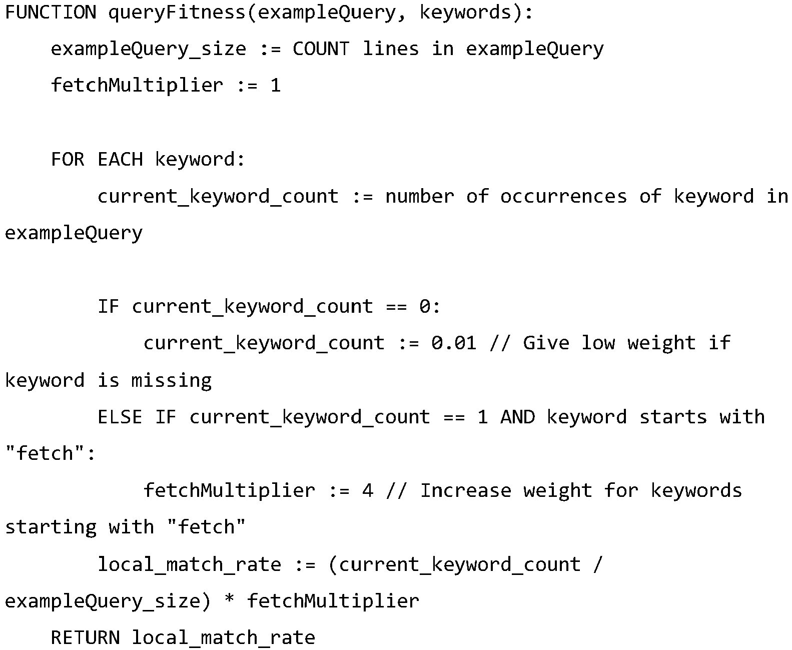

Returning to figure 2a. System 200 comprises an adjusting unit 240 taking as input the input query 211 and the selected query(ies) 232. Adjusting unit 240 produces an executable data query 241. Adjusting unit 240 is configured to apply a machine learning model to the selected at least one query 232 example to adjust the selected at least one query example according to the input query. Machine learning model may be an LLM, e.g., trained on the query language. The LLM may be general purpose LLM. It was found that a preferable prompt is to have the machine learning model reduce the size of the example query.

For example, the following prompt may be used, in this case for GraphQL queries.
GIVEN 1: {inputQuery}
GIVEN 2: {example query}
TASK: reduce the GIVEN 2 GraphQL query to be minimal answering GIVEN 1.

The output of the LLM may be used as the executable query 241. In an embodiment, the resulting query may be further enhanced. The query may be enhanced to include filters that specify particular attributes of the data in the data source. This allows for more targeted data retrieval, catering to the specific needs of the operation, and/or to reduce the amount of data. The latter both reduces bandwidth and computation; an inadvertent large query may put a strain on the data source. It also helps further processing, e.g., by a further machine learning model to report to a user.

For example, the model output query 241 may be enhanced with arguments, e.g., to limit responses from the data source. For example, in the context of a landscape, by directly querying certain identifiers (IDs) or names, etc. The query can incorporate unique data identifiers such as IDs or names to directly access certain subsets of the landscape data. By using these identifiers, the query can hone in on specific nodes or components within the computer system, e.g., SAP landscape, thus making the data retrieval process more efficient and precise.

It is not necessary to provide the machine learning model, e.g., the LLM, e.g., adjusting unit 240 with all or part of a schema of the data source. Nevertheless, successful experiments were performed in which one or more example queries were provided together with part of the schema to obtain the adjusted query. For example, the part of the scheme may be a part relevant for the query. For example, a relevant part may be associated with the example query, e.g., in advance, possibly by an expert user. For example, the part of the scheme may be selected automatically from the input query and/or example query. For example, the part of the scheme may be selected in dependency on parsing the example query. Part of schema may be obtained from the parse tree, e.g., visited nodes of the schema together with neighboring nodes, e.g., nodes on the same parsing level, parent node, and/or child nodes. Providing a part of a scheme is especially helpful in case the example queries cannot cover every possible combination. In a situation, the machine learning model, e.g., the LLM cannot restrict itself to reducing the example query, which is sufficient in simpler cases, but should also add elements to the query example.

In an embodiment, multiple example queries were provided, e.g., 2 or more, or more, and this improved the quality of responses. In an embodiment, multiple example queries were provided together with part of a schema defining the data source.

After generating query 241, it may be reported to a user, or stored, or the like. System 200 comprises an optional query execution unit 250 configured to execute the executable query 241, possibly with optional enhancements, at the data source. In this example, the data source is a database 251, but various other options are possible, in particular a landscape. The data source responds with a query result 252. For example, the query may be executed against a landscape model. For example, GraphQL query may be executed.

Before query 241 is executed, the user may be asked for consent. Query 241 may optionally be verified by a rule-based system. However, in experiments no generating queries were encountered that were syntactically incorrect. A small number of queries were generated that could be improved semantically, e.g., by changing or increasing the data retrieved. Semantic problems were successfully mitigated by adding human made example queries to the plurality. The syntactic and semantic success of embodiments is one of the advantages of generating queries from example queries instead from a schema description. Query 241 may also be enhanced before executing, as described herein.

System 200 comprise an optional user response unit 260 configured to generate user response 261 based on response data 252. Once the data has been retrieved it may be presented to the user as is, but preferably, a more focused answer to the initial query 211 is formulated. For example, such a focused response helps the user by including only the technical information that is relevant, or by integrating the technical information, for the user to take informed action based on the technical feedback, e.g., of a landscape.

Formulating a response may be done using an LLM. The LLM may be provided with the data response, and input query 211, and asked to answer query 211. For example, the following zero-shot prompt may be used.
GIVEN 1: {query result}
GIVEN 2: {inputQuery}
TASK: Answer GIVEN 2 by using the data from GIVEN 1.

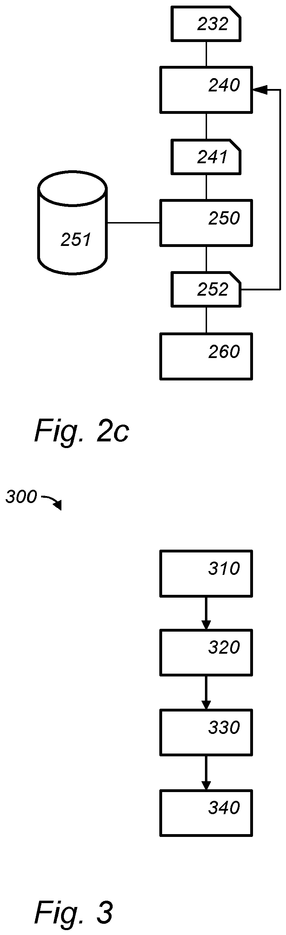

**Figure 2c** schematically shows an example of an embodiment of a system for generating an executable data query. This system is similar to system 200 shown in figure 2a, with an optional additional feature. It may happen that data source 251 responds with an error message instead of with response 252. System 200 may be configured to detect that data source 251 responds with an error. In this case, system 200 could give an error message of its own and abort the process. In figure 2c another option is provided. If data source 251 responds with an error, the executable data query is adjusted with a machine learning model. For example, a machine learning model, e.g., an LLM, may be prompted with the input query 211, and the error message. The model is also be provided with the example query 232 and/or the executable query 241. In the prompt, the LLM is tasked with repairing the problem in the query which caused the error in the data source.

Using a machine learning model/LLM to correct errors is optional. Using an LLM is not required, even if error correction is used. For example, one may instead use known solutions to fix errors, e.g., such as removing a field that does not exist.

In various units of system 200 a machine learning model may be used, e.g., in a data-needed unit 220, a query selection unit 230, e.g., a keyword selection unit 233, an adjusting unit 240, and a user response unit 260. Various choices exist for all of these units, e.g., as described herein. For example, for some of these rule-based systems, and the like may be used. For others an LLM may be used. The machine learning model used in these units may be different, or some may be the same, distinguished, e.g., through prompting. In fact, all of them may be implemented with the same LLM.

Machine learning models for these units, especially unit 240, may be sequence-based models configured to receive a sequence of tokens as input and to produce a sequence of tokens as output. For example, a transformer model may be used. In particular, a generative model, in particular a text generative model may be used.

Good results have been achieved using the large language model ChatGPT, e.g., based on GPT-4, using the 32k token size version. Similar results are expected with other general purpose LLMs, e.g., Claude. Preferably, an LLM is used that is trained on both a natural language corpus and a corpus in the query language.

When using an LLM both zero shot prompting or few shot prompting may be used. A context prompt is preferably included, e.g., with keyword explanation, and optionally a role of the LLM. The context prompt may be predetermined by an expert user, e.g., based on the data source. In an embodiment, the context source is derived directly from data source documentation.

In experiments, the LLM almost always provided a consistent output, especially if so prompted. A consistent output means an output that adheres to a predefined format. For example, an output format may be comma separated keyword list, a yes/no answer, a grammatically correct query, and so on. If an output is detected with an inconsistent format, e.g., by parsing the answer, it may be ignored and an error raised, or the LLM may be prompted to repair the problem. If it turns out in practice that consistent output is a problem, several approaches can be used. For example, the LLM can be provided with a one-shot, or few-shot learning example in a prompt. However, this approach takes away from the maximum token size available in the LLM input. Another approach is fine-tuning for output consistency. For instance, fine-tuning may be useful when the LLM needs to answer in a specific format, like syntactically structed text according to a grammar, or JSON or XML, especially for executable query generation, including API calls. It can also improve the LLM's reliability in delivering the correct answers alongside the desired format, e.g., restricting to a yes/no response or a keyword list. Metrics like formatting accuracy and answer correctness can be measured to ensure the LLM is not losing its capabilities while being fine-tuned. Although output consistency was not a significant problem, even for the base model, fine-tuning can enhance performance, even with a modest training sample size, e.g., fewer than 100 training samples.

A neural network may be trained or fine-tuned specifically for various subtasks, e.g., for matching example queries to a given natural language question, which may be used, e.g., in query selection unit 230. Likewise neural networks may be trained or fine-tuned for one or more of: a data-needed unit 220, keyword selection unit 233, an adjusting unit 240, and a user response unit 260. In this case, multiple neural networks may be used. However, good results were achieved using only a single general purpose LLM.

Formulating correct queries is technically demanding for humans, yet technical personnel needs technical information to adequately maintain technical systems, e.g., landscapes, hyperscalers, servers, including file servers, web servers and the like. For example, based on the information returned by executing the executable query, technical personnel may take a technical intervention.

Embodiments are useful to a maintainer of computer systems, such as landscapes, including SAP landscapes, online systems, multi-user systems, servers, including file servers, web servers, etc. A user can obtain technical data about the computer system, e.g., using a defective input query that does not fully adhere to a grammar, or even a natural language input query. In this way, the maintainer may ask one or more questions, and obtain technical data reflecting the technical state of the computer system. For example, the maintainer may obtain information about the current state of the system, interpretation of landscape data, summaries of system information, and reports. Based on the obtained information, the maintainer may take various actions, e.g., technical interventions to change the technical state of the computer system. Below a number of examples thereof are given.
1. Resource Management: In response to the insights from the LLM, a computer maintainer may start a new VM or stop an existing one depending on resource needs. They could also allocate more memory to services that are under heavy load. In some cases, they may have to terminate specific processes that are hogging resources or initiate disk space cleanup to free up storage.
2. System Optimization: The maintainer may adjust the network configuration. The maintainer might optimize data routing to enhance network performance. Adjusting the settings of load balancers could be another task to ensure that workloads are distributed efficiently across servers. They could also make network configuration changes for optimized connectivity or carry out an energy consumption audit to identify areas of improvement.
3. Data Reliability and Backup: To safeguard data, the maintainer might initiate database replication activities. The information could also prompt them to backup important data and set restore points to protect against potential data loss.
4. Security and Access Control: Security settings might be audited for vulnerabilities, based on the obtained data. Additionally, a review of user permissions might be undertaken to ensure that only authorized personnel have access to sensitive data and functionalities.
5. Software and System Updates: Finally, if outdated software is flagged, the maintainer may schedule software updates to keep the system secure and functional.

In addition to maintaining a computer system, embodiments may be applied in a number of other settings. For example, in an embodiment the queries are used for data analytics and reporting. The system enables users to swiftly retrieve specific data sets or generate reports. This streamlines decision-making by eliminating the need to learn a particular query language, making it easier to make quick, data-driven decisions. For example, in an embodiment the queries are used for database management. Database administrators use natural language to perform typical tasks, such as creating, reading, updating, and deleting records, making it more convenient and accessible to manage databases. For example, in an embodiment the queries are used for healthcare. An embodiment is useful in a healthcare setting, where medical professionals may obtain patient information, drug interactions, or medical history by asking the system. In these examples, translating queries, such as natural language, into computer queries like SQL or GraphQL reduces the time to obtain data, including technical data.

Below a number of examples are presented. The examples have been obtained from a prototype of an embodiment. The examples have been edited, for length, and to remove sensitive information about private computer systems.

### Example 1

This example shows a number of input queries, and the responses formulated based on retrieved data.
Input query: Do we have any kind of administrative information or grouping for our systems?
Output: Yes, based on the data provided, there is a grouping for the systems. The systems are organized under a group called "DEV" with an ID "a7b8c91d-1234-5678-9101-112ebf141516". This group has a total of 20 systems, including SAP HANA Databases and SAP NetWeaver for ABAP instances.
Input query: please list all the systems related
Output: Here is a list of all the systems related:
   1. System: S01
      - SAP HANA Database, s01db.example.com
      - SAP NetWeaver for ABAP 7.50, s01cs.example.com
      (...)

### Example 2

This example shows a number of input queries, and the responses formulated based on retrieved data.
Input query: How is the current status of my datacenter?
Output: Based on the given data, the current status of your data center is as follows:
   All SAP systems and their instances are running without any errors. The systems include SAP HANA Databases, SAP NetWeaver for ABAP 7.50, and their respective instances. The virtual machines associated with these instances are also running, with an average CPU utilization of 0.5 for each VM.
   In summary, your data center is running smoothly, and all systems are operational.

### Example 3

This example shows a number of input queries, and the responses formulated based on retrieved data. This example was executed on a system 200, in which all machine learning models were based on an LLM using zero shot prompting. This example also shows how prompting may be automated.

### 1. User Variables:

The input query is saved as a variable inputQuery.
{inputQuery} = "List all VMs"

### 2. Initial Prompt to LLM to check if Data is needed

In optional unit 220, it is verified if the input query needs additional data to be retrieved. This may be done with the following prompt:
GIVEN Input query:{inputQuery}
TASK: Decide if a remote API Call should be executed to provide data for the Input query
DECISION CRITERIA:
   1. The answer to the GIVEN Input query can be improved by using data from an existing IT Landscape or Datacenter?
   2. One of the following words are related to the Input query:
      'meanCpuUsage', 'fetchVirtualMachines', 'identifier', 'recentChange',
      'authDetails', 'entityName', 'installedVMs', 'queryInstalledVMs',
      'associatedVM', 'nonStandardSystems', (...)
      Answer 'Yes' or 'No' only"""
      Response LLM: "Yes"

### 3. LLM Prompt to identify keywords

In this example, an example query is selected using the mechanism shown in figure 2b. The LLM is used for keyword selection, e.g., as in keyword selection unit 233.
GIVEN: A set of keywords: 'meanCpuUsage', 'fetchVirtualMachines', 'identifier', 'recentChange', 'authDetails', 'entityName',
'installedVMs', 'queryInstalledVMs', 'associatedVM',
'nonStandardSystems', (...)
USER QUESTION: {inputQuery}
GOAL: From a set of given GraphQL queries we need to identify the query best answering the USER QUESTION. We can identify the best matching GraphQL query based on the selected keywords.
YOUR TASK:
   remove every word from the GIVEN list that may not help to answer the USER QUESTION
RESPONSE FORMAT:
   Answer in format <keyword, keyword> without any additional comments or text or description
Response LLM: "<entityName, installedVMs, fetchVirtualMachines>"

### 4. Identified Query from the example Queries

Using the mechanism of figure 2b, an example query is selected from a plurality of queries. The plurality is not included, and the selected example query is abbreviated due to its length. Priority was given in selection to example queries where the fetch* clause matches one of the keywords.

```
       query {
            fetchVirtualMachines {
                 meanCpuUsage
                 (...)
                 }
                 accountName
                 state {
                      (...)
                 }
            }
       }
```

### 5. LLM request to adjust selected query

The selected query is adjusted using the following prompt. Note that the prompt includes an option to include errors. This is not used when the call is made for the first time, as no errors are yet available (if any). The error functionality was not used in this example, and the corresponding part of the prompt was omitted.
GIVEN: Fully expanded and fully complete representation of a GraphQL
query: {previousQuery}
USER INPUT: {inputQuery}
ERRORS FROM PREVIOUS EXECUTIONS: {previousErrors}
TASK: Without adding a new field to an entity make the query minimal with respect to the USER INPUT

### Response from LLM:

```
       query {
               fetchVirtualMachines {
                       identifier
                       description
               }
       }
```

### 6. Response from GraphQL Data Interface

The adjusted query has been run on a landscape, and the result is shown below, in abbreviated form

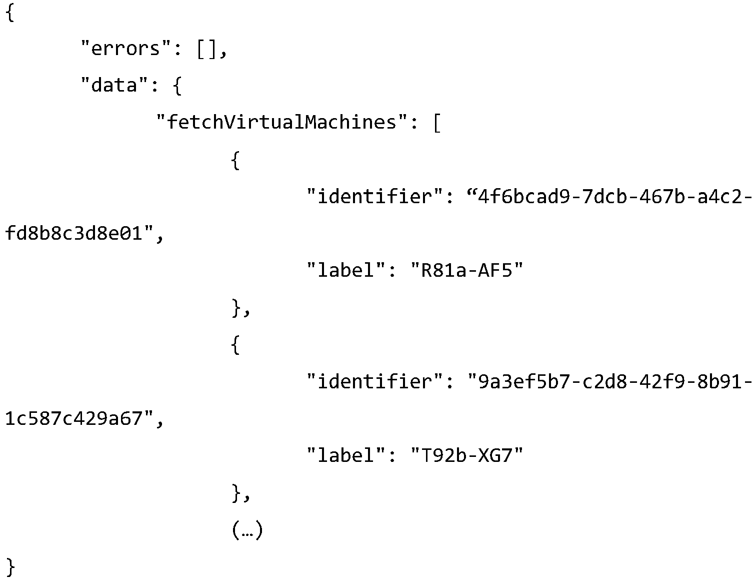

### 7. LLM Request to provide the final answer to the input query

Finally, the LLM is tasked to answer the original input query, using the data retrieved above.
GIVEN DATA: {dataResultFromPreviousOutput}
Based on the data above, answer the following input query:{inputQuery}

### LLM response:

Based on the provided data the following 41 Virtual machines exist in our landscape:
R81a-AF5
T92b-XG7
   (...)

### 8. Context instructions

Every prompt with the LLM has a system role definition set as context on how the LLM should behave, and to provide contextual knowledge based on the following snippet.
"role": "system", "content": """An interaction between a human IT Specialist and an AI that manages Datacenters, infrastructure and enterprise systems. For some background information you may refer to the following dictionary:
identifier: technical identifier as UUID
recentChange: Timestamp of last update
entityName: Entity name.
installedVMs: VMs installed.
meanCpuUsage: Mean usage of CPU (last 7 days).
authDetails: Scenario authentication details.
associatedVM: VM associated with Instance.
fetchVirtualMachines: Fetch Virtual Machines query
   (...)."""

Figure 3 schematically shows an example of an embodiment of a method 300 for generating an executable data query, wherein said query is configured for execution at a data source for the purpose of data retrieval therefrom. Method 300 may be computer implemented and comprises
- accessing (310) a plurality of query examples, the query examples in the plurality being syntactically correct according to a query language and being configured to correctly retrieve data from the data source when executed at the data source,
- obtaining (320) an input query requiring information from the data source, the input query being noncompliant with the query language and inexecutable at the data source,
- selecting (330) from the plurality of query examples at least one query example related to the input query,
- applying (340) a machine learning model to the selected at least one query example to adjust the selected at least one query example according to the input query, thus obtaining the executable data query.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform an embodiment of method 300. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform an embodiment of the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

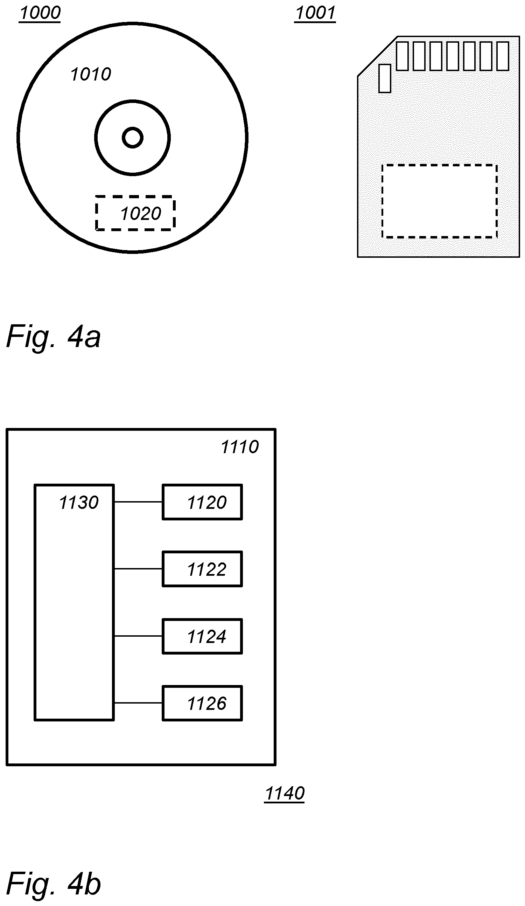

**Figure 4a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method for generating an executable data query according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform an embodiment of said method for generating an executable data query.

**Figure 4b** shows in a schematic representation of a processor system 1140 according to an embodiment of a system for generating an executable data query. The processor system comprises one or more integrated circuits 1110. The architecture of the one or more integrated circuits 1110 is schematically shown in Figure 4b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., the executable data query generating device may comprise a processor circuit and a memory circuit, the processor being arranged to execute software stored in the memory circuit. For example, the processor circuit may be an Intel Core i7 processor, ARM Cortex-R8, etc. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform elements or subroutines of the methods described herein such that the multiple processors cooperate to achieve the functionality described herein. Further, where the system 1140 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A computer-implemented method (300) for generating an executable data query, wherein said query is configured for execution at a data source for the purpose of data retrieval therefrom, the method comprising
- accessing (310) a plurality of query examples, the query examples in the plurality being syntactically correct according to a query language and being configured to correctly retrieve data from the data source when executed at the data source,
- obtaining (320) an input query requiring information from the data source, the input query being noncompliant with the query language and inexecutable at the data source,
- selecting (330) from the plurality of query examples at least one query example related to the input query,
- applying (340) a machine learning model to the selected at least one query example to adjust the selected at least one query example according to the input query, thus obtaining the executable data query.

2. The method as in any of the preceding claims, wherein the data source adheres to a schema defining the organization of data in the data source, the plurality of query examples satisfying the schema.

3. The method as in any of the preceding claims, wherein obtaining the executable data query further comprises reducing a size of the at least one query example using the machine learning model.

4. The method as in any of the preceding claims, wherein selecting at least one query example comprises
- identifying keywords, from a predetermined list of keywords, applying to the input query,
- scoring each query example of the plurality of query examples for the identified keywords,
- selecting at least one high scoring query example from the plurality of query examples.

5. The method as in any of the preceding claims, wherein selecting at least one query example comprises
- converting the input query into an input embedding vector,
- obtaining for the plurality of query examples, a plurality of corresponding embedding vectors,
- selecting a query example from the plurality of query examples according to a vector similarity between the input embedding vector and embedding vectors in the plurality of embedding vectors.

6. The method according to any of the preceding claims, wherein
- the input query is a technical state query requesting information regarding a technical state of a technical system, and/or
- the input query is a natural language query.

7. The method according to any of the preceding claims, comprising
- executing the executable query at the data source,
- if the data source responds with an error, adjusting the executable data query with a machine learning model.

8. The method as in any of the preceding claims, wherein the query language is one of: GraphQL, SQL.

9. The method as in any of the preceding claims, wherein the machine learning model comprises a
- a sequence-based model configured to receive a sequence of tokens as input and to produce a sequence of tokens as output, and/or
- a transformer model, and/or
- generative model, in particular a text generative model.

10. The method as in any of the preceding claims, wherein applying the machine learning model to the selected at least one query example comprises, applying the machine learning model to the selected at least one query example and at least part of a schema defining the organization of data in the data source.

11. A system comprising: one or more processors; and one or more storage devices storing instructions that, when executed by the one or more processors, cause the one or more processors to perform operations for a method according to any of the preceding claims.

12. A transitory or non-transitory computer readable medium (1000) comprising data (1020) representing instructions, which when executed by a processor system, cause the processor system to perform a method according to any of Claims 1-10.
